(19) Europäisches Patentamt / European Patent Office / Office européen des brevets

(11) **EP 2 472 238 A1**

(12) **EUROPEAN PATENT APPLICATION**

(43) Date of publication:
04.07.2012 Bulletin 2012/27

(51) Int Cl.:
*G01H 1/00* (2006.01)          *F03D 11/00* (2006.01)

(21) Application number: 10197278.4

(22) Date of filing: 29.12.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: SIEMENS AKTIENGESELLSCHAFT
80333 München (DE)

(72) Inventors:
• Laurberg, Hans
8000, Århus C (DK)
• Rieper, Johnny
8700, Horsens (DK)

(54) **Determination of a vibrational frequency of a wind turbine rotor blade with a sensor device being placed at a structural component being assigned to and/or being part of the rotor**

(57)   It is described a system for determining a vibrational frequency of a blade (112a) being attached to a structural component (110) being assigned to and/or being part of a rotor of a wind turbine (100), wherein the blade (112a) is vibrating within a rotational plane of the rotor. The system comprises (a) a sensor device (120) being sensitive to a movement along a first sensor direction (x), wherein the sensor device (120) is placeable at the structural component (110) such that the first sensor direction (x) and the direction of the longitudinal extension of the blade (112a) have a first fixed angular relationship with respect to each other and wherein the sensor device (120) is configured to provide a first sensor output signal (a_x) being indicative for the movement of the structural component (110) along the first sensor direction (x). The system further comprises a data processing unit (130, 230) being connected with the sensor device (120), wherein the data processing device (130, 230) is configured to determine the vibrational frequency of the blade (112a) based on the first sensor output signal (a_x) and on the first fixed angular relationship. It is further described a corresponding method for determining a vibrational frequency of a blade (112a) and a computer program for controlling such a method. Further, it is described a wind turbine (100) being equipped with such a system for determining a vibrational frequency of a blade (112a).

FIG 1

**Description**

Field of invention

The present invention relates to the technical field of wind turbines. In particular, the present invention relates to a system and to a method for determining a vibrational frequency of a blade being attached to a structural component being assigned to and/or being part of a rotor of a wind turbine, wherein the blade is vibrating within a rotational plane of the rotor. Further, the present invention relates to a wind turbine being equipped with such a system and to a computer program for controlling such a vibrational frequency determination method.

Art Background

Modern wind turbines comprise large rotors with long blades. In order to allow for a reliable and stable operation of a wind turbine in particular the rotor blades must not be completely stiff or rigid but must be at least partially flexible. As a consequence, apart from the wanted rotational movement of the rotor blades the individual rotor blades may perform vibrations. One type of vibrations is the so called blade edge vibration which takes place in a plane being oriented parallel with respect to the rotational plane of the rotor.

For operating modern wind turbines in a reliable and stable manner, it is essential to have a precise knowledge about the vibrational frequencies of the wind turbine rotor blades. In particular such a knowledge may be used

(a) for detecting an icing of the blades (the mass of attached ice causes the vibrational frequency of the blade to decrease),
(b) for a detection of structural changes within the blade, which also cause the vibrational frequency of the blade to change,
(c) an estimation of the mechanical loads acting on the blade,
(d) as an input for a so called rotor speed avoider (specific rotor speeds which could cause resonance effects with respect to a vibrating blade and/or an oscillatory movement of the wind turbine tower should be avoided),
(e) for a classification of the type of blade which is used and/or for a classification of parameters of a specific blade within a known class of blade (different blade sizes have an effect on the vibrational frequency) and/or
(f) for an automated detection of a blade repair which has been made.

Different ways are currently known to estimate the vibrational frequency of a wind turbine rotor blade:

(A) If the wind turbine blade has a blade sensor such as for instance an acceleration sensor, an elongation sensor or a strain gauge mounted at an outer section of the blade the vibrational frequency can be detected by using any frequency detection method on the output signal provided by the respective blade sensor.

(B) WO 2009/000787 A2 describes a method for estimating the blade vibrational frequency based on the time dependent movement respectively the time dependent acceleration of the tower of a wind turbine. A tower acceleration signal is demodulated with a signal being representative for the rotor azimuth signal. In case of a rotor having three blades it is possible to estimate all three blade frequencies. Since an acceleration sensor is typically provided at or within the nacelle of a wind turbine, this known method does not need any additional sensors.

(C) For a specific type of blade the blade edge frequency is typically relative constant. Therefore, it is possible to manually estimate the blade frequency by using the same frequency for similar blades.

There may be a need for further improving the determination of a vibrational frequency of a wind turbine rotor blade.

Summary of the Invention

This need may be met by the subject matter according to the independent claims. Advantageous embodiments of the present invention are described by the dependent claims.

According to a first aspect of the invention there is provided a system for determining a vibrational frequency of a blade being attached to a structural component being assigned to and/or being part of a rotor of a wind turbine, wherein the blade is vibrating within a rotational plane of the rotor. The described system comprises (a) a sensor device being sensitive to a movement along a first sensor direction, wherein the sensor device is placeable at the structural component such that the first sensor direction and the direction of the longitudinal extension of the blade have a first fixed angular relationship with respect to each other and wherein the sensor device is configured to provide a first sensor output signal being indicative for the movement of the structural component along the first sensor direction, and (b) a data processing unit being connected with the sensor device, wherein the data processing device is configured to determine the vibrational frequency of the blade based on the first sensor output signal and on the first fixed angular relationship.

The described system is based on the idea that blade vibrations which take place within the rotational plane of the rotor will cause also the structural component to move in a vibrating manner within the same rotational plane. The described sensor device is capable of measuring such a structural component movement. The corresponding first sensor output signal, which is indicative for the movement of the structural component, is evaluated by the data processing unit. Thereby, the first fixed angular relationship between the first sensor direction and the direction of the longitudinal extension of the blade is taken into account.

The term movement may mean any extrinsic and/or intrinsic positional change of the structural component. In this respect extrinsic means that the whole structural component is moving. Intrinsic may mean that mechanical forces, which are caused by a vibration of the blade, are acting on the structural component such that (slight) deformations of the structural component occur, which can be measured e.g. by means of a strain gauge.

The first sensor direction may be oriented within a plane being parallel or at least approximately parallel with respect to the rotational plane of the rotor. This may provide the advantage that the sensitivity of the sensor device with respect to movements being parallel with respect to the rotational plane of the rotor will be increased and/or disturbing effects caused by a movement of the structural component along a direction being perpendicular to the rotational plane (e.g. a tower of the wind turbine moves back and forth) will be minimized.

The first fixed angular relationship may be weighted with a factor comprising a trigonometric function such as a cosine function and/or a sine function of the angle between the first sensor direction and the direction of the longitudinal extension of the blade.

The described system may provide the advantage that it is from a technical point of view very simple and there is therefore little possibility to make errors. Since only one structural component movement signal is used the described invention can be realized by means of an independent product which can be merchandized within a box. Further, apart from a data processing means only the sensor device and an appropriate connection between the sensor device and the data processing means are necessary to realize the described invention. Therefore, the additional hardware costs for realizing the described invention are very small. The software realization of the claimed invention may be achieved by means of an appropriate program installation on an already present data processing unit of a wind turbine.

It is mentioned that with the described system it is not necessary however not forbidden to use a knowledge of the actual azimuth angle of the rotating rotor for the determination of the vibrational frequency of the blade. This makes the computational effort, which has to be met by the data processing unit, comparatively small.

According to an embodiment of the invention the sensor device comprises an acceleration sensor. This may provide the advantage that the sensor device can be realized with a simple, reliable and comparatively cheap type of sensor. The (first) sensor output signal will then be indicative for the time dependent acceleration of the structural component. Of course, by integrating this signal over time a time dependent velocity of the structural component can be determined. Further, by integrating the signal provided by the acceleration sensor two times over time a time dependent position of the structural component can be determined.

In this respect it is mentioned that also other types of sensors can be used for realizing the described sensor device. In particular a positional sensor such as for instance a sensor relying on a satellite positioning system such as the Global Positioning System (GPS) can be used for effectively determining the movement of the structural component. Of course, by differentiating a signal being indicative for the actual position of the structural component two times over time an acceleration characteristic signal can be evaluated. Further, a strain gauge can be used for realizing the described sensor device. In accordance with the invention the strain gauge is placeable at the structural component. In particular, the strain gauge could be placed at a main shaft within a hub of the rotor of the wind turbine. Thereby it can be assumed that blade vibrations will propagate via the hub to the main shaft. Further, the strain gauge could also be placed at a mechanical connection between the hub and the blade.

According to a further embodiment of the invention the sensor device is placeable at the structural component in such a manner that the first sensor direction and the direction of the longitudinal extension of the blade are oriented perpendicular with respect to each other. This may provide the advantage that the sensor device will be highly sensitive to the blade vibrations which take place within the rotational plane. As a consequence, the reliability of the system for determining the vibrational frequency of the blade may be increased.

According to a further embodiment of the invention (a) the sensor device is further sensitive to a movement along a second sensor direction being different with respect to the first sensor direction, (b) the sensor device is configured to provide a second sensor output signal being indicative for the movement of the structural component along the second sensor direction, and (c) the data processing unit is configured to determine the vibrational frequency of the blade based on the second sensor output signal and on a second fixed angular relationship between the second sensor direction and the direction of the longitudinal extension of the blade.

Also the second sensor direction may be oriented within a plane being parallel or at least approximately parallel with respect to the rotational plane of the rotor. This may provide the advantage that the sensitivity of the sensor device with respect to movements being parallel with respect to the rotational plane of the rotor will be further increased and/or disturbing effects caused by a structural component movement along a direction being perpendicular to the rotational plane (e.g. a tower of the wind turbine moves back and forth) will be minimized.

It is mentioned that if the second sensor direction and the longitudinal extension of the blade are oriented parallel with respect to each other (i.e. the second fixed angular relationship corresponds to an angle of zero degrees), the second sensor output signal will be taken into account with a weight factor of zero. This means that in this case only the first sensor signal will be taken into account for the determination of the vibrational frequency of the blade.

According to a further embodiment of the invention the first sensor direction and the second sensor direction are perpendicular with respect to each other. This may provide the advantage that a high sensitivity for all blade vibrations can be achieved which take place within the rotational plane. In other words, as long as a blade vibration occurs within the rotational plane this vibration can be sensed independent from the direction of the vibration.

According to a further embodiment of the invention the data processing unit is configured to determine the vibrational frequency of at least one further blade based on (a) the first sensor output signal and on the second sensor output signal and on (b) a further fixed angular relationship between the first sensor direction and the direction of the longitudinal extension of the further blade and another further fixed angular relationship between the second sensor direction and the direction of the longitudinal extension of the further blade.

Generally speaking, based on a combination of the two sensor output signals the blade vibrations of all blades, which vibrations take place within the rotational plane, can be determined.

It is mentioned that of course the further fixed angular relationship and the another further fixed angular relationship are complementary with respect to each other in that sense their angular sum depends on the angle between the first sensor direction and the second sensor direction. Specifically, if the first sensor direction and the second sensor direction are perpendicular, the sum of the further fixed angular relationship and the another further fixed angular relationship amounts to 90°. Thereby, only angles between 0° and 90° have been used in order to define all relative orientations between (a) the first sensor direction respectively the second sensor direction and (b) the longitudinal extension of the blade respectively the longitudinal extension of the further blade.

According to a further embodiment of the invention the data processing unit is configured to determine the vibrational frequency of the at least one further blade based on a weighted combination of the first sensor output signal and the second sensor output signal. Thereby, (a) the weight factor for the first sensor output signal comprises one of the sine function and the cosine function of the another further fixed angular relationship between the second sensor direction and the direction of the longitudinal extension of the further blade and (b) the weight factor for the second sensor output signal comprises the other one of the sine function and the cosine function of the another further fixed angular relationship between the second sensor direction and the direction of the longitudinal extension of the further blade.

This embodiment may provide the advantage that the weighted combination of the two sensor output signals can be realized with time independent weight factors, which only depend on the orientation of the sensor device at the structural component and the angular distribution of the blades being attached to the structural component.

According to a further embodiment of the invention apart from determining the vibrational frequency of the blade the data processing device is configured to determine the vibrational frequency of exactly two further blades, a first further blade and a second further blade, wherein the angle between each one of the blades and its two neighboring blades is in each case 120°. Further, the first sensor direction and the direction of the longitudinal extension of the blade are oriented perpendicular with respect to each other. Thereby, the vibrational frequency $F\_a$ of the blade is given by $F\_a = a\_x$, the vibrational frequency $F\_b$ of the first further blade is given by $F\_b = \cos(30°) \cdot a\_z + \sin(30°) \cdot a\_x$, and the vibrational frequency $F\_c$ of the second further blade is given by $F\_c = \cos(30°) \cdot a\_z - \sin(30°) \cdot a\,x$. Thereby, $a\_x$ is the first sensor output signal and $a\_z$ is the second sensor output signal.

According to a further embodiment of the invention the system further comprises a filter being connected between the sensor device and the data processing unit or being assigned to the data processing unit, wherein the filter is configured for filtering the first sensor output signal and/or the second sensor output signal.

The filter may comprise for instance a so called notch filter. Thereby, the notch frequency response may be chosen such that all frequencies around at least one known tower frequency (i.e. blade frequencies corresponding to the eigenfrequency of possible tower movements/vibrations or harmonics thereof) will be removed or at least strongly attenuated. Further, the notch filter frequency response may be chosen such that the actual rotational frequency of the rotor and/or its harmonics will be removed or at least strongly attenuated.

Further, the filter may comprise a band pass filter which allows only signal frequencies within a certain frequency bandwidth to pass to the data processing unit. Thereby, the frequency bandwidth may be selected based on a previous knowledge about possible vibrational frequencies. This may provide the advantage that the Signal to Noise Ration (SNR) of the signal(s) being fed to the data processing unit can be significantly increased.

According to a further embodiment of the invention the data processing unit comprises a frequency detector. The frequency detector may be realized by means of a Phase Locked Loop (PLL) Circuit and/or by means of unit performing a Fourier Transformation, in particular a Fast Fourier Transformation (FFT).

According to a further embodiment of the invention the structural component is a hub or a main shaft of a wind turbine.

Typically in a wind turbine the main shaft and the hub are mechanically connected which each other. As a consequence, vibrations and/or a movement of the hub will also cause vibrations and/or a movement of the main shaft and vice versa.

In particular when a strain gauge is used as the sensor device it may be advantageous to place the strain gauge at the main shaft for instance within the hub. Thereby, it can be assumed that blade vibrations will propagate via the hub to the main shaft, where they can be detected.

According to a further aspect of the invention there is provided a wind turbine for generating electrical power. The wind turbine comprises (a) a structural component being assigned to and/or being part of a rotor comprising a blade being attached directly or indirectly to the structural component and (b) a system as described above, wherein the sensor device of the system is attached to the structural component.

The described wind turbine is based on the idea that the above described system can be used for determining blade vibrations, which take place within the rotational plane of the rotor, in an effective a reliable manner.

According to a further aspect of the invention there is provided a method for determining a vibrational frequency of a blade being attached to a structural component being assigned to and/or being part of a rotor of a wind turbine, wherein the blade is vibrating within a rotational plane of the rotor. The provided method comprises (a) providing a first sensor output signal being indicative for a movement of the structural component along a first sensor direction by a sensor device being sensitive to a movement of the structural component, wherein the sensor device is placed at the structural component such that the first sensor direction and the direction of a longitudinal extension of the blade have a first fixed angular relationship with respect to each other and (b) determining the vibrational frequency of the blade by a data processing unit being connected with the sensor device based on the first sensor output signal and on the first fixed angular relationship.

Also the described method is based on the idea that by placing the sensor device at the structural component blade vibrations which take place within the rotational plane of the rotor and which therefore also cause the structural component to move in a vibrating manner within the same rotational plane can be determined based on the first sensor output signal and on the first fixed angular relationship between the first sensor direction and the direction of the longitudinal extension of the blade.

According to a further aspect of the invention there is provided a computer program for determining a vibrational frequency of a blade being attached to a structural component being assigned to and/or being part of a rotor of a wind turbine, wherein the blade is vibrating within a rotational plane of the rotor. The computer program, when being executed by a data processor, is adapted for controlling the above described method.

As used herein, reference to a computer program is intended to be equivalent to a reference to a program element and/or to a computer readable medium containing instructions for controlling a computer system to coordinate the performance of the above described method.

The computer program may be implemented as a computer readable instruction code in any suitable programming language, such as, for example, JAVA, C++, and may be stored on a computer-readable medium (removable disk, volatile or nonvolatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to the examples of embodiment but to which the invention is not limited.

Brief Description of the Drawing

Figure 1 shows a wind turbine comprising a rotor with three rotor blades being attached to a hub and a sensor device being located at the hub, wherein the sensor device is adapted for providing two sensor output signals being indicative for accelerations within a rotational plane of the rotor.
Figure 2 shows a data processing unit for determining a vibrational frequency of a wind turbine blade being attached to a hub based on a two sensor output signals, which are provided by a two-dimensional acceleration sensor device being located at the hub.

Detailed Description

The illustration in the drawing is schematically. It is noted that in different figures, similar or identical elements are provided with reference signs, which are different from the corresponding reference signs only within the first digit.

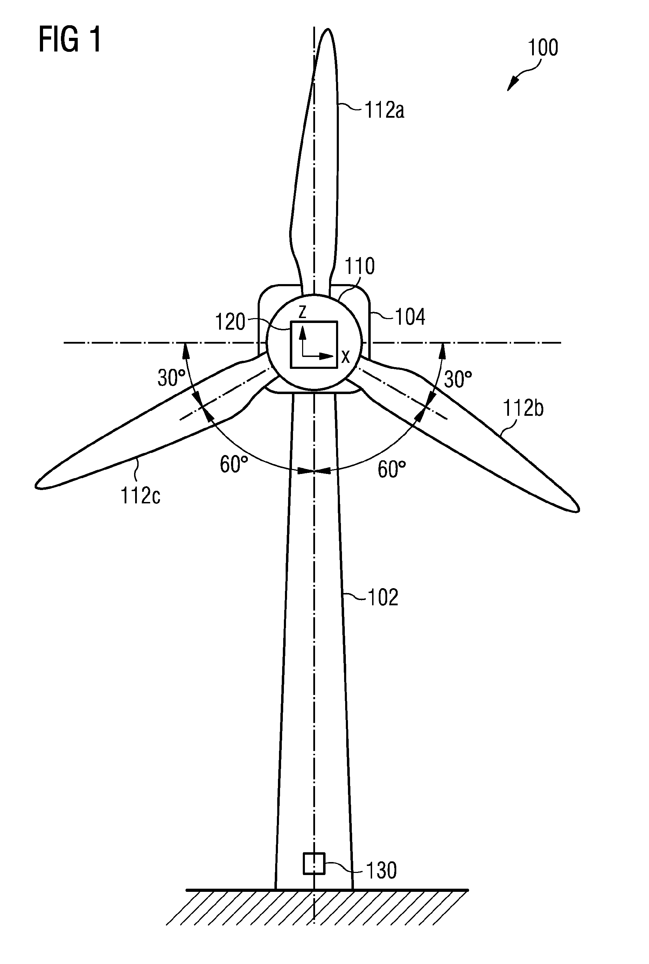

Figure 1 shows a wind turbine 100 in accordance with an embodiment of the present invention. The wind turbine comprises a tower 102 and a nacelle 104 rotatable mounted on top of the tower 102. Further, the wind turbine comprises a rotor having a hub 110 mounted at central rotating shaft (not depicted), which drives an electric generator (also not depicted) being accommodated within the nacelle 104. According to the embodiment described here the rotor comprises three blades 112a, 112b and 112c. The blades 112a-c extend in a circumferential symmetric manner radial outwards from the hub 120. Therefore, the angle between the longitudinal directions of two neighboring blades is 120°.
The wind turbine 100 further comprises a sensor device 120, which is sensitive to an accelerational movement of the hub 110 within a plane being parallel to the rotor plane which is spanned by axes being defined by the longitudinal extensions of the blades 112a, 112b and 112c, respectively. According to the embodiment described here the sensor device is a two-dimensional acceleration sensor device 120, wherein a first sensor direction, i.e. the x-direction, is oriented perpendicular to the longitudinal extension of the blade 112a and the second sensor direction, i.e. the z-direction, is oriented parallel to the longitudinal extension of the blade 112a. Due to the above described rotational symmetry the longitudinal extension of the blade 112b forms a 30° angle with respect to the x-direction. The same holds also for the longitudinal extension of the blade 112b, which also forms a 30° angle with respect to the x-direction.
The two-dimensional acceleration sensor 120 provides a first sensor output signal a x being indicative for the movement of the hub 110 along the x-direction and a second sensor output signal a_z being indicative for the movement of the hub 110 along the z-direction. The first sensor output signal and the second sensor output signal are fed to a data processing unit 130, which is adapted to determine the vibrational edge frequency of the oscillation of each blade 112a-c within the rotor plane based on the first sensor output signal and on the second sensor output signal and on the angular relationships between the x-direction and the longitudinal extension of the blade 112b and the longitudinal extension of the blade 112c, respectively.
Specifically, according to the embodiment described here the blade edge frequencies of the blades 112a, 112b and 112c are determined with the help of an accelerometer 120 mounted in the hub 110. The accelerometer 120 measures (a) in the direction along blade 112a (denoted z direction) with a corresponding sensor output signal a_z and (b) within the rotor plane in the direction perpendicular to blade 112a (denoted x direction) with a corresponding sensor output signal a x. The basic idea is to determine the blade edge frequency F_a of the blade 112a directly from the sensor output signal a_x. Thereby, F_a = a_x. Since the blade edge frequency F_a of blade 112a is directly measurable in the signal a x it can be estimated by any frequency detector such as a Phase Locked Loop (PLL) unit and/or a Fast Fourier Transform (FFT) device. Taking into account the trigonometric relationships between the directions of the longitudinal extensions of the blades 112b and 112c and the x- respectively the z-direction the blade edge frequency F_b of the blade 112b and the blade edge frequency F_c of the blade 112c can be calculated with the following equations:

$$F\_b = \cos(30°) \cdot a\_z + \sin(30°) \cdot a\_x \qquad (1)$$

$$F\_c = \cos(30°) \cdot a\_z - \sin(30°) \cdot a\_x \qquad (2)$$

In order to improve the described blade edge frequency determination it may be necessary to remove other signal components by using an appropriate filter. Examples for such filters are: (a) a notch filter centered around the tower frequency, (b) a band pass filter around known blade edge frequency in order to improve the Signal to Noise Ratio (SNR), and (c) a notch filter to remove frequency components corresponding to the rotational frequency and a multiples of this frequency.

It is mentioned that in many cases the hub 110 can only move in the horizontal plane (i.e. the tower 102 is moving from side to side) and not in the vertical plane. This means that a blade movement results also in a tower movement. Therefore, this kind of tower movement will be the blade movement modulated with the rotor azimuth as described e.g. in WO 2009/000787 A2 discussed above. To use the tower movement in order to estimate the blade movement it may be therefore advantageous to demodulate the various sensor output signals a_x and/or a_z with the rotor position. It is mentioned that in WO 2009/000787 A2 this is done with algebra, wherein according to the embodiment described here the matter fact is employed that the accelerometer 120 in the hub 110 automatically demodulates the tower accelerations.

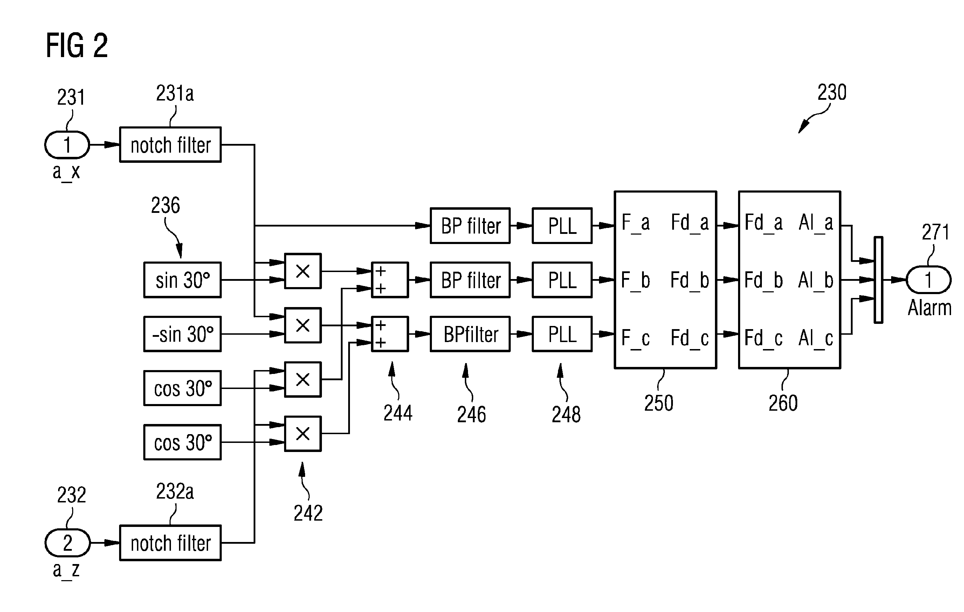

Figure 2 shows the data processing unit 130, which is now denominated with reference numeral 230. The data processing unit 230 is adapted for determining the vibrational edge frequencies of the blades 112a, 112b and 112c of the wind turbine 100.

The data processing unit 230 illustrated in Figure 2 comprises an input terminal 231 for receiving the above defined first sensor output signal a_x provided by the two-dimensional acceleration sensor device 120. Further, the data processing unit 230 comprises an input terminal 232 for receiving the above defined second sensor output signal a_z provided by the two-dimensional acceleration sensor device 120. A notch filter 231a is used for filtering out a frequency component corresponding to the rotational frequency of the rotor from the first sensor output signal a_x. A notch filter 232a is used for filtering out a frequency component corresponding to the rotational frequency of the rotor from the second sensor output signal a_z.

The data processing unit 230 further comprises memory units 236 for storing weight factors corresponding to the trigonometric relationship between (a) the longitudinal directions of the blades 112b and 112b and (b) the x-direction. In accordance with the equations (1) and (2) given above the weight factors are cos 30°, sin 30° and -sin 30°. Respectively one of the outputs from the notch filters 231a and 232a and one of the weight factors is fed to one of the multipliers 242 as depicted in Figure 2. Further, the respectively two signals from the altogether four signals provided by the multipliers 244 are fed to two adding units 244 in accordance with Figure 2.

The data processing unit 230 further comprises three band pass filters 246. As can be seen from Figure 2, one band pass filter 246 receives an input signal directly from the notch filter 231a. This input signal is the filtered first sensor output signal a_x. The other two band pass filters 246 receive their input signal from the first adding unit 244 and the second adding unit 244, respectively. Each one of these input signals is a weighted sum of the first sensor output signal a_x and the second sensor output signal a_z (see equations (1) and (2) given above).

The data processing unit 230 further comprises three frequency peak detectors 248, which according to the embodiment described here are realizes as Phase Lock Loop (PLL) circuits. As can be further seen from Figure 2, the output signals from the three PLL frequency peak detectors 248 are fed to a difference calculation unit 250 which is common for all three rotor blades 112a, 112b and 112c.

In the difference calculation unit 250 the difference between the respective blade frequencies F_a, F_b and F_c and a function depending on the mean values of the other two blades and on an initial frequency difference is calculated. Specifically, since each of the respective edge frequencies will be varying with changes e.g. in the temperature of the blade there is typically also some initial difference in the blade frequencies e.g. because of different mass distributions. Therefore the detection of the frequency change of one blade has to be carried out with respect to the other blades. A method for detecting relative changes in the blade frequency is described in the formulas (3), (4) and (5) given below. E.g. for determining the frequency difference Fd_a being assigned to the blade 112a the corresponding blade frequency F_a is subtracted by the mean value of the frequencies F_b and F_c of the others blades 112b and 112c, respectively. Further, the initial difference dF_a_init is subtracted to remove the initial deviation. This could be found by calculating the mean value for e.g. one day.

$$Fd\_a = F\_a - 0.5 \cdot (F\_b + F\_c) - dF\_a\_init \qquad (3)$$

$$Fd\_b = F\_b - 0.5 \cdot (F\_a + F\_c) - dF\_b\_init \qquad (3)$$

$$Fd\_c = F\_c - 0.5 \cdot (F\_a + F\_b) - dF\_c\_init \qquad (3)$$

Signals being indicative for these frequency differences Fd_a, Fd_b and Fd_c are provided to a difference level integrator and alarm trigger unit 260, where an alarm is triggered when predefined set criteria are reached. According to the embodiment described here an integration of the absolute value of the differences Fd_a, Fd_b and Fd_c over time and a subtraction by an allowed difference (Fd_allowed) is performed. This results in a respective signal which increases fast over time if there is great difference and which increases slow over time if there are only small deviations. When these signals reach a respective given threshold level an alarm should be set and the wind turbine should be stopped. In case an alarm is set, a corresponding alarm signal is output from the data processing unit via an output terminal 271.

Further details about the unit 260 and the procedure to generate an alarm signal can be found in the above mentioned document WO 2009/000787 A2.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

**Claims**

1. A system for determining a vibrational frequency of a blade (112a) being attached to a structural component (110) being assigned to and/or being part of a rotor of a wind turbine (100), wherein the blade (112a) is vibrating within a rotational plane of the rotor, the system comprising
   a sensor device (120) being sensitive to a movement along a first sensor direction (x),
   wherein the sensor device (120) is placeable at the structural component (110) such that the first sensor direction (x) and the direction of the longitudinal extension of the blade (112a) have a first fixed angular relationship with respect to each other and
   wherein the sensor device (120) is configured to provide a first sensor output signal (a_x) being indicative for a movement of the structural component (110) along the first sensor direction (x), and
   a data processing unit (130, 230) being connected with the sensor device (120), wherein the data processing device (130, 230) is configured to determine the vibrational frequency of the blade (112a) based on the first sensor output signal (a_x) and on the first fixed angular relationship.

2. The system as set forth in the preceding claim, wherein the sensor device comprises an acceleration sensor (120).

3. The system as set forth in any one of the preceding claims, wherein
   the sensor device (120) is placeable at the structural component (110) in such a manner that the first sensor direction (x) and the direction of the longitudinal extension of the blade (112a) are oriented perpendicular with respect to each other.

4. The system as set forth in any one of the preceding claims, wherein
   the sensor device (120) is further sensitive to a movement along a second sensor direction (z) being different with respect to the first sensor direction (x),
   the sensor device (120) is configured to provide a second sensor output signal (a_z) being indicative for the movement of the structural component (110) along the second sensor direction (z), and
   the data processing unit (130, 230) is configured to determine the vibrational frequency of the blade (112a) based on the second sensor output signal (a_z) and on a second fixed angular relationship between the second sensor direction and the direction of the longitudinal extension of the blade (112a).

5. The system as set forth in the preceding claim, wherein the first sensor direction (x) and the second sensor direction (z) are perpendicular with respect to each other.

6. The system as set forth in any one of the preceding claims 4 to 5, wherein
   the data processing unit (130, 230) is configured to determine the vibrational frequency of at least one further blade (112b) based on

   (a) the first sensor output signal (a_x) and on the second sensor output signal (a_z) and on
   (b) a further fixed angular relationship between the first sensor direction (x) and the direction of the longitudinal extension of the further blade (112b) and another further fixed angular relationship between the second sensor direction (z) and the direction of the longitudinal extension of the further blade (112b).

7.  The system as set forth in the preceding claim, wherein the data processing unit (130, 230) is configured to determine the vibrational frequency of the at least one further blade (112b) based on a weighted combination of the first sensor output signal (a_x) and the second sensor output signal (a_z), wherein

    - the weight factor for the first sensor output signal comprises one of the sine function and the cosine function of the another further fixed angular relationship between the second sensor direction (z) and the direction of the longitudinal extension of the further blade (112b) and
    - the weight factor for the second sensor output signal (a_z) comprises the other one of the sine function and the cosine function of the another further fixed angular relationship between the second sensor direction (z) and the direction of the longitudinal extension of the further blade (112b).

8.  The system as set forth in the preceding claim,
    wherein apart from determining the vibrational frequency of the blade (112a) the data processing device (130, 230) is configured to determine the vibrational frequency of exactly two further blades (112b, 112c), a first further blade (112b) and a second further blade (112c), the angle between each one of the blades (112a, 112b, 112c) and its two neighboring blades being in each case 120°,
    wherein the first sensor direction (x) and the direction of the longitudinal extension of the blade (112a) are oriented perpendicular with respect to each other,
    wherein the vibrational frequency F_a of the blade (112a) is given by

$$F\_a = a\_x,$$

wherein the vibrational frequency F_b of the first further blade (112b) is given by

$$F\_b = cos(30°) \cdot a\_z + sin(30°) \cdot a\_x,$$

and
wherein the vibrational frequency F_c of the second further blade (112c) is given by

$$F\_c = cos(30°) \cdot a\_z - sin(30°) \cdot a\_x,$$

whereby
a_x is the first sensor output signal and
a_z is the second sensor output signal.

9.  The system as set forth in any one of the preceding claims, further comprising
    a filter (231a, 232a, 246) being connected between the sensor device and the data processing unit (130, 230) or being assigned to the data processing unit (130, 230), wherein the filter (231a, 232a, 246) is configured for filtering the first sensor output (a_x) signal and/or the second sensor output signal (a_z).

10. The system as set forth in any one of the preceding claims, wherein
    the data processing unit (130, 230) comprises a frequency detector (248).

11. The system as set forth in any one of the preceding claims, wherein
    the structural component is a hub (110) or a main shaft of a wind turbine (100).

12. A wind turbine (100) for generating electrical power, the wind turbine (100) comprising
    a structural component (110) being assigned to and/or being part of a rotor comprising a blade (112a) being attached directly or indirectly to the structural component (110) and
    a system as set forth in any one of the preceding claims, wherein the sensor device (120) is attached to the structural component (110).

13. A method for determining a vibrational frequency of a blade (112a) being attached to a structural component (110) being assigned to and/or being part of a rotor of a wind turbine (100), wherein the blade (112a) is vibrating within a rotational plane of the rotor, the method comprising

providing a first sensor output signal (a_x) being indicative for a movement of the structural component (110) along a first sensor direction (x) by a sensor device (120) being sensitive to a movement of the structural component (110), wherein the sensor device (120) is placed at the structural component (110) such that the first sensor direction (x) and the direction of a longitudinal extension of the blade (112a) have a first fixed angular relationship with respect to each other and

determining the vibrational frequency of the blade (112a) by a data processing unit (130, 230) being connected with the sensor device (120) based on the first sensor output signal (a_x) and on the first fixed angular relationship.

14. A computer program for determining a vibrational frequency of a blade (112a) being attached to a structural component (110) being assigned to and/or being part of a rotor of a wind turbine (100), wherein the blade (112a) is vibrating within a rotational plane of the rotor, the computer program, when being executed by a data processor, is adapted for controlling the method as set forth in the preceding claim.

# FIG 1

100

FIG 2

Europäisches
Patentamt

European
Patent Office

Office européen
des brevets

**EUROPEAN SEARCH REPORT**

Application Number

EP 10 19 7278

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/021900 A1 (SIEMENS AG [DE]; EGEDAL PER [DK]; STIESDAL HENRIK [DK]) 19 February 2009 (2009-02-19) * abstract * * figures 3,9,10 * * page 1, lines 5-7 * * page 3, lines 30-38 * * page 4, lines 7-10 * * page 4, line 38 - page 5, line 18 * * page 6, line 12 - page 8, line 14 * ----- | 1-14 | INV. G01H1/00 F03D11/00 |
| X | WO 2009/047121 A2 (SIEMENS AG [DE]; BIRKEMOSE BO [DK]; STIESDAL HENRIK [DK]; VINTHER SOER) 16 April 2009 (2009-04-16) * abstract * * figure 2 * * page 1, lines 5-7 * * page 2, lines 14-31 * * page 3, lines 1-6 * * page 8, line 29 - page 9, line 3 * * claims 1,2 * ----- | 1,3, 10-14 | |
| A | US 2010/133814 A1 (SCHULTEN CHRISTOPH [DE]) 3 June 2010 (2010-06-03) * abstract * * figures 1,4 * * paragraphs [0019] - [0021] * ----- | 1-14 | TECHNICAL FIELDS SEARCHED (IPC) G01H F03D |

The present search report has been drawn up for all claims

| Place of search | Date of completion of the search | Examiner |
|---|---|---|
| The Hague | 13 October 2011 | Meyer, Matthias |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**

**ON EUROPEAN PATENT APPLICATION NO.**

EP 10 19 7278

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2011

| Patent document cited in search report | | Publication date | Patent family member(s) | | Publication date |
|---|---|---|---|---|---|
| WO 2009021900 | A1 | 19-02-2009 | AT | 514985 T | 15-07-2011 |
| | | | CA | 2696189 A1 | 19-02-2009 |
| | | | CN | 101779170 A | 14-07-2010 |
| | | | DK | 2179337 T3 | 10-10-2011 |
| | | | EP | 2179337 A1 | 28-04-2010 |
| | | | US | 2011148110 A1 | 23-06-2011 |
| WO 2009047121 | A2 | 16-04-2009 | CA | 2701850 A1 | 16-04-2009 |
| | | | CN | 101849104 A | 29-09-2010 |
| | | | EP | 2195527 A2 | 16-06-2010 |
| | | | JP | 2010540841 A | 24-12-2010 |
| | | | US | 2010250013 A1 | 30-09-2010 |
| US 2010133814 | A1 | 03-06-2010 | CN | 101907063 A | 08-12-2010 |
| | | | EP | 2258946 A2 | 08-12-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2009000787 A2